# EUROPÄISCHE PATENTSCHRIFT

(11) **EP 3 175 437 B1**
(45) Veröffentlichungstag und Bekanntmachung des Hinweises auf die Patenterteilung: **17.10.2018**
(21) Anmeldenummer: 15752939.7
(22) Anmeldetag: 27.07.2015
(51) Int. Cl.: G09B 21/00

(54) **TAKTILES SCHREIBGERÄT**
TACTILE WRITING INSTRUMENT
INSTRUMENT D'ÉCRITURE TACTILE

(30) Priorität: 30.07.2014 DE 102014011326
(43) Veröffentlichungstag der Anmeldung: 07.06.2017
(73) Patentinhaber: Inventivio GmbH, 90427 Nürnberg (DE)
(72) Erfinder: HARS, Alexander, 90427 Nürnberg (DE)
(74) Vertreter: FDST Patentanwälte
(86) Internationale Anmeldenummer: PCT/EP2015/067191
(87) Internationale Veröffentlichungsnummer: WO 2016/016205

(56) Entgegenhaltungen:
- WO-A1-92/15079
- DE-A1- 3 602 355
- DE-U1- 8 701 657
- JP-A- H04 180 083

## Beschreibung

Die Erfindung betrifft ein Schreibgerät zur Anzeige eines taktil wahrnehmbaren Punktmusters, insbesondere als Brailleschrift und/oder als Grafik.

Ein derartiges Schreibgerät, das als Hilfsmittel für sehbehinderte oder blinde Personen dient, umfasst eine Anzeigetafel mit Öffnungen zur Aufnahme von taktil wahrnehmbaren Elementen oder Objekten, welche entsprechend des gewünschten und üblicherweise als Brailleschrift darzustellenden Punktmusters in die entsprechenden Öffnungen der Anzeigetafel verbracht werden können.

Aus der DE 10 2006 02 568 A1 ist eine Anzeigevorrichtung zur taktil erfassbaren Darstellung von Anzeigeelementen (Bildelemente, Grafiken, Zeichenelemente, Schriftzeichen, Symbole) bekannt, welche von einem Computer ausgegebene Informationen in Brailleschrift umsetzt. Hierzu werden auf einer Tastfläche einzelne Anzeigestifte durch Stellmotoren entsprechend der Ausgabe des Computers angesteuert.

Aus der JP 04180083 A ist es bekannt, als taktil erfassbares Elemente (Tastelement) eine Metallkugel zu verwenden, die mittels eines ansteuerbaren Elektromagneten aus einer Lageebene in eine Anzeigeeben und dort in eine Öffnung verbracht werden kann. Um die Kugel in der entsprechenden Position zu halten, wird eine Metallplatte unter die entsprechende Öffnung geführt.

Nachteilig bei den bekannten Vorrichtungen ist insbesondere der hohe Aufwand hinsichtlich der Antriebsmechanismen zum Setzen und Halten der taktilen Stifte oder Kugeln an die bzw. in der bestimmungsgemäßen Position in der Anzeigeebene (Tastfläche oder Anzeigetafel). Darüber hinaus können insbesondere bei der Verwendung von Elektromagneten nur relativ große Anzeigeflächen mit einer nur relativ geringen Anzahl von Tastelementen bereit gestellt werden. Diese müssen zudem aufgrund der nur begrenzt minimalisierbaren Abmessungen der Elektromagneten sowie deren magnetischer Wechselwirkungen mit relativ großen magnetischen Wirkflächen in entsprechend großen Abständen zueinander positioniert werden, um ein unerwünschtes zeitgleiches Anheben mehrerer Kugeln zu vermeiden.

Der Erfindung liegt die Aufgabe zugrunde, ein besonders geeignetes Schreibgerät zur Anzeige eines taktil wahrnehmbaren Punktmusters, insbesondere als Brailleschrift und/oder als Grafik, anzugeben. Insbesondere soll ein taktil wahrnehmbares Punktmuster mit einer möglichst großen Anzahl von Tastpunkten auch auf einer relativ kleinen Anzeigefläche erzeugt werden können.

Diese Aufgabe wird erfindungsgemäß gelöst mit den Merkmalen des Anspruchs 1. Vorteilhafte Ausgestaltungen und Weiterbildungen sind Gegenstand der Unteransprüche.

Hierzu weist das Schreibgerät zur Anzeige eines taktil erfassbaren Punktmusters eine Führungseinrichtung mit einer Unterplatte in einer unteren Lageebene und eine Oberplatte in einer zur Lageebene vertikal beabstandeten Anzeigeebene sowie zwischen diesen Ebenen eine Trennplatte und geeigneterweise oberhalb der Oberplatte eine Schreibkopfanordnung mit einer Anzahl von Schreibköpfen, vorzugsweise in Form ansteuerbarer Elektromagnete auf. Diese sowie die Trennplatte sind relativ zur Führungseinrichtung und somit gegenüber der Oberplatte, welche eine Anzeigefläche darstellt, translatorisch verfahrbar.

Die Oberplatte und die Unterplatte weisen eine Anzahl von matrixartig in Zeilen und Spalten angeordnete Öffnungen in einem Öffnungsraster auf. Dieses ist bei beiden Platten gleich, so dass die Öffnungen (Tastöffnungen) der Oberplatte mit denjenigen (Lageöffnungen) der Unterplatte fluchten, d. h. vertikal direkt übereinander angeordnet sind. In den Lageöffnungen der Unterplatte liegen nachfolgend auch als Tastelemente bezeichnete taktile Elemente ein, vorzugsweise in Form von metallischen Kugeln. Diese werden beim bestimmungsgemäßen Gebrauch des Schreibgerätes mittels der geeigneterweise als Elektromagnete ausgeführten Schreibkopfanordnung aus der Unterplatte in die Oberblatte transportiert. Die Tastelemente sitzen dann dort in den ausgewählten Tastöffnungen ein und ragen an der Oberseite der Oberplatte aus den Tastöffnungen zumindest geringfügig heraus, so dass sie durch Berührung mit den Fingern einer Bedienperson wahrnehmbar sind.

Um ein ständiges Aufrechterhalten der Transportkraft der Schreibkopfanordnung, d. h. in dessen bevorzugten Ausführung mit Elektromagneten deren dauerhafte Bestromung zu vermeiden, werden während des Vorschubs der Schreibkopfanordnung mit gesteuertem Transport der Tastelemente in die Öffnungen der Oberplatte zeitgleich oder zeitlich versetzt mittels der in Bewegungsrichtung hinter der Schreibkopfanordnung geführten Trennplatte die mit Tastelemente beschickten Öffnungen unterhalb der Oberplatte abgedeckt, so dass die Tastelemente nicht in die Unterplatte zurückfallen können.

Die ebenfalls translatorisch geführte Trennplatte umfasst einen für die taktilen Elemente durchlässigen ersten Plattenbereich und einen sich in Bewegungs- oder Vorschubrichtung an den ersten Plattenbereich anschließenden zweiten Plattenbereich auf, der für die Tastelemente undurchlässig ist. Der erste Plattenbereich oder -abschnitt weist vorzugsweise eine der Anzahl der Zeilen des Öffnungsrasters der Tast- und/oder Lageöffnungen entsprechende Anzahl von Aussparungen auf. Die Anzahl der Aussparungen kann auch der Anzahl der Schreibköpfe oder dem Bruchteil hiervon entsprechen.

Im Zuge der Bewegung der Trennplatte, die vorzugsweise mit der Bewegung der Schreibkopfanordnung synchronisiert ist, gelangen die Aussparungen der Trennplatte in Überdeckung mit den Öffnungen der Unter- und Oberplatte, so dass ein gezielter Transportkanal von einer entsprechenden Öffnung der Unterplatte über die entsprechende Aussparung der Trennplatte zur korrespondierende Öffnung der Oberplatte gebildet ist. Der sich in Bewegungsrichtung anschließende undurchlässige Plattenbereich der Trennplatte verschließt dann spaltenweise die entlang der jeweiligen Zeile beschickten Öffnungen der nachfolgend auch als Anzeigetafel bezeichneten Oberplatte, so dass die dort einliegenden Tastelemente auch bei deaktivierter Schreibkopfanordnung in der Anzeigetafel verbleiben.

Die Anzahl der Schreibköpfe der relativ zur Führungseinrichtung in Bewegungsrichtung geführten Schreibkopfanordnung, welche gemäß dem anzuzeigenden Punktmuster die entsprechenden Tastelemente aus der Unterplatte in die Oberplatte fördert, entspricht in einer ersten Variante der Anzahl der Zeilen des Öffnungsrasters der Oberplatte (Anzeigetafel). Alternativ kann die Anzahl der Schreibköpfe auch lediglich einen Bruchteil der Zeilenzahl betragen. Umfasst beispielsweise das Öffnungsraster der Anzeigetafel 384 Tastpunkte in 16 Zeilen und 24 Spalten so können beispielsweise vier oder acht Schreibköpfe vorgesehen sein, welche die entsprechenden vier bzw. zwei Zeilengruppen mit jeweils vier bzw. acht Zeilen nacheinander überfahren, um die entsprechenden Öffnungen der Oberplatte mit den taktilen Elementen zu bestücken.

Um ein Punktmuster mit einer besonders hohen Anzahl von Tastpunkten, beispielsweise zur Erstellung einer Grafik, insbesondere auch im für die Brailleschrift üblichen Punkteraster von 2,5mm zu realisieren, sind in der Schreibkopfanordnung zumindest einige der Schreibköpfe in Bewegungsrichtung hintereinander und zueinander zeilenweise versetzt angeordnet. Hierdurch können Schreibköpfe und insbesondere Elektromagneten eingesetzt werden, deren Abmessungen oder Durchmesser größer ist als die Größe der Öffnungen der Ober- und Unterplatte. Jeder Schreibkopf ist hierbei geeigneterweise jeweils einer der Zeilen und somit den in dieser in Bewegungsrichtung hintereinander angeordneten Öffnungen der Oberplatte zugeordnet.

Jeder Zeile des Öffnungsrasters der Ober- und Unterplatte ist eine Aussparung in der Trennplatte zugeordnet. Jedem der Schreibköpfe ist jeweils eine Aussparung im durchlässigen Plattenbereich der Trennplatte zugeordnet. Die Aussparungen der Trennplatte schirmen somit praktisch den Transportkanal zwischen den korrespondierenden, miteinander fluchtenden Öffnungen der Unter- und Oberplatte seitlich, d. h. in der horizontalen Trennplattenebene ab. Hierdurch ist besonders zuverlässig ein gegenseitiges Stören der Schreibköpfe verhindert, insbesondere wenn diese als vorzugsweise versetzt angeordnete Elektromagnete ausgeführt sind.

Bei geeigneter Synchronisation der Bewegungen der Schreibkopfanordnung und der Trennplatte mittels einer entsprechenden Antriebs- oder Bewegungssteuerung befinden sich die Schreibköpfe während eines durch den gesteuerten Transport der Tastelemente bewirkten Schreibvorgangs stets über der diesen jeweils zugeordneten Aussparung in der Trennplatte.

Gemäß einer vorteilhaften Ausgestaltung ist die Schreibkopfanordnung auch in Gegenrichtung zur translatorischen Bewegungsrichtung und somit bidirektional verfahrbar. Insbesondere in dieser Ausgestaltung ist es besonders zweckmäßig, wenn die Trennplatte beidseitig des für die Tastelemente durchlässigen ersten Plattenbereich einen für die Tastelemente undurchlässigen zweiten Plattenbereich aufweist. Die Anzeigefläche oder -tafel kann somit in beiden translatorischen Bewegungsrichtungen beschrieben und/oder überschrieben werden.

Eine weitere Ausgestaltung der Trennplatte sieht ein Öffnungsfenster im für die Tastelemente durchlässigen ersten Plattenbereich vor. Das Öffnungsfenster erstreckt sich - in Querrichtung zur Bewegungsrichtung gesehen - über zumindest eine Zeile, geeigneterweise jedoch über mehrere oder sogar alle Zeilen des Öffnungsrasters oder dem Bruchteil hiervon. Geeigneterweise sind dann die Aussparungen in Bewegungsrichtung sowohl vor als auch nach dem Öffnungsfenster vorgesehen. Das Öffnungsfenster ermöglicht ein gezieltes und zeitsparendes Löschen der Anzeigetafel, indem zeitgleich diejenigen Tastelemente (taktilen Elemente) aus der Oberplatte in die Unterplatte zurückfallen, deren Öffnungen im Zuge der Bewegung der Trennplatte vom Öffnungsfenster überstrichen werden. Die während der Bewegung nachfolgenden Aussparungen der Trennplatte ermöglichen das erneute Beschicken der Oberplatte - und somit ein erneutes Beschreiben der Anzeigetafel bzw. -fläche - mit Tastelemente aus der Unterplatte.

Bei der bidirektionalen Ausgestaltung des Schreibgerätes, dessen Trennplatte in dieser Ausführungsform das zusätzliche Öffnungsfenster im ersten Plattenbereich aufweist, dient eine der beiden benachbarten Aussparungsbereiche zur Überführung der Tastelemente von der Unterplatte in die Oberplatte in einer Bewegungsrichtung, während die andere dieser beiden Aussparungsbereiche zur Überführung der Tastelemente von der Unterplatte in die Oberplatte in der anderen Bewegungsrichtung dient.

Gemäß einer vorteilhaften Weiterbildung des Schreibgerätes ist der für die Tastelemente undurchlässige zweite Plattenbereich der Trennplatte vom für die Tastelemente durchlässigen ersten Plattenbereich lösbar. Bei der Ausgestaltung mit bidirektional verfahrbarer Schreibkopfanordnung schließen sich beidseitig des für die Tastelemente durchlässigen ersten Plattenbereichs jeweils ein für die Tastelemente undurchlässiger Plattenbereich an. Diese, für die Tastelemente undurchlässigen Plattenbereiche weisen geeigneterweise die gleichen Abmessungen auf wie die obere Anzeigetafel (Oberplatte). Diese Ausgestaltung der zerlegbaren Trennplatte ermöglicht eine Abtrennung der mit den Tastelementen entsprechend dem gewünschten Tastpunktmustern bestückten Oberplatte zusammen mit dem für die Tastelemente undurchlässigen Plattenbereich (Plattenabschnitt) von der Führungseinrichtung des Schreibgerätes, um somit eine entsprechend beschriebene Anzeigetafel mit taktil erfassbarem, das heißt durch Berührung wahrnehmbarem Tastpunktmuster separat zu lagern oder getrennt vom Schreibgerät mitzuführen.

Gemäß einer Variante ist die Trennplatte als biegeelastisches Trennband ausgeführt. Bei einer Ausführung als geschlossenes Trennband mit zumindest einem Aussparungsbereich oder den beiden zum Öffnungsfenster benachbarten Aussparungsbereichen wird dieses Trennband zweckmäßigerweise gemeinsam mit der Oberplatte und der Unterplatte aus dem Schreibgerät entnommen, um die entsprechend bestimmungsgemäß bestückte Anzeigetafel separat aufzubewahren.

Die taktilen Elemente sind vorzugsweise kugelförmig, insbesondere mit einem Kugeldurchmesser von (1,5 ± 0,5) mm. Die Schreibköpfe sind zweckmäßigerweise ansteuerbare Elektromagnete. Insbesondere bei der Ausführung der taktilen Elemente (Tastelemente) als Kugeln ist die lichte Weite der Öffnungen der Oberplatte kleiner als der Kugeldurchmesser. Dieser kann insbesondere 1,0mm bis 2,0mm und vorzugsweise 1,6mm betragen. Um ein Herausfallen der Tastelemente zu verhindern, kann zusätzlich oder alternativ auf der Oberplatte auch eine Folie oder dergleichen Abdeckung vorgesehen sein.

Bei einer Anzeigefläche der durch die Oberplatte gebildeten Anzeigetafel in der Größe DIN A4 werden bei einem Rastermaß von 2,5mm insgesamt 9996 Kugeln mit einem Kugeldurchmesser von 1,6mm in einer entsprechenden Anzahl von Lageöffnungen der Unterplatte bereitgestellt. Die Dicke der Anzeigetafel beträgt dann etwa 5mm, sodass die Anzeigetafel nicht nur stationär verwendet werden kann, sondern vielmehr auch mehrere Anzeigetafeln, beispielsweise in einer Tasche, mitgeführt werden können.

Nachfolgend werden Ausführungsbeispiele der Erfindung anhand einer Zeichnung näher erläutert. Darin zeigen:
- Fig. 1: in perspektivischer Darstellung ein Schreibgerät zur Anzeige eines taktil erfassbaren Tastpunktmusters einer Schreibkopfanordnung und mit einer Oberplatte sowie mit einer Unterplatte und mit einer Trennplatte zwischen der Ober- und Unterplatte,
- Fig. 2: das Schreibgerät gemäß Fig. 1 in einer Explosionsdarstellung,
- Fig. 3: die Trennplatte mit beidseitig eines Aussparungsbereiches jeweils einem geschlossen Plattenbereich,
- Fig. 4: eine Variante der Trennplatte mit beidseitig eines Öffnungsfensters angeordneten Aussparungsbereichen sowie abnehmbarem Plattenbereich ohne Aussparungen in einer Explosionsdarstellung,
- Fig. 5: in einer Explosionsdarstellung eine Ausführungsform der Trennplatte als geschlossenes Trennband und entnehmbarer Bestandteil zusammen mit der Oberplatte und der Unterplatte,
- Fig. 6: schematisch ein Aussparungsraster der Trennplatte mit geschlossenen Aussparungen sowie entsprechend angeordnete Schreibköpfe und ein Öffnungsraster mit einer Vielzahl von matrixartig angeordneten Öffnungen in beispielhaft sechs Zeilen einer Anzeigefläche,
- Fig. 7: schematisch ein weiteres Aussparungsraster der Trennplatte mit wiederum mit geschlossenen Aussparungen in Überdeckung mit einem Öffnungsrasters der Unter- und Oberplatte mit ebenfalls beispielhaft sechs Zeilen gemäß Fig. 6,
- Fig. 8: schematisch ein weiteres Aussparungsraster der Trennplatte mit teilweise offenen Aussparungen in Überdeckung mit einem offenen Öffnungsrasters der Unter- und Oberplatte mit wiederum beispielhaft sechs Zeilen,
- Fig. 9a bis 9e: schematisch in einer Schnittdarstellung die Funktionsweise des Schreibgerätes in aufeinanderfolgenden Funktionsschritten in einer Bewegungsrichtung.

Einander entsprechende Teile sind in allen Figuren mit den gleichen Bezugszeichen versehen.

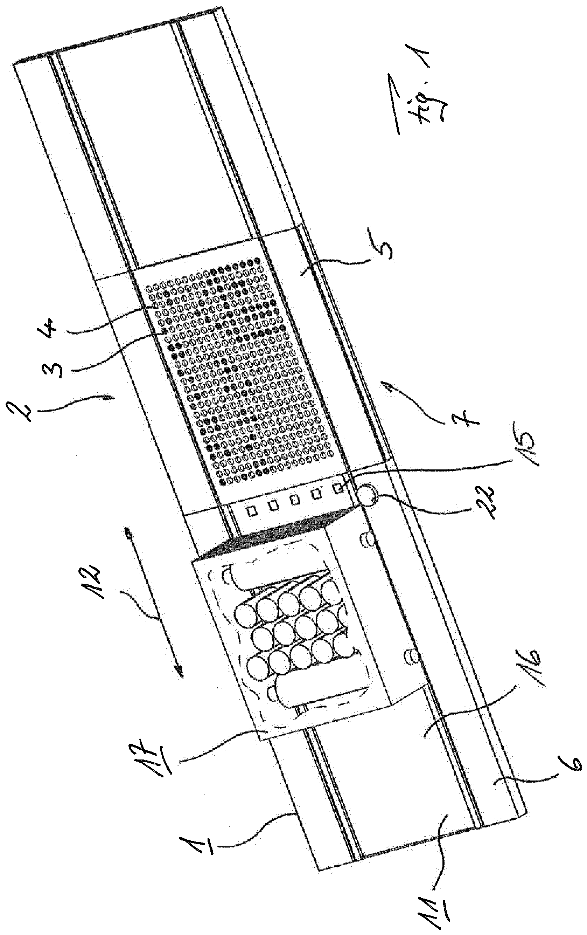

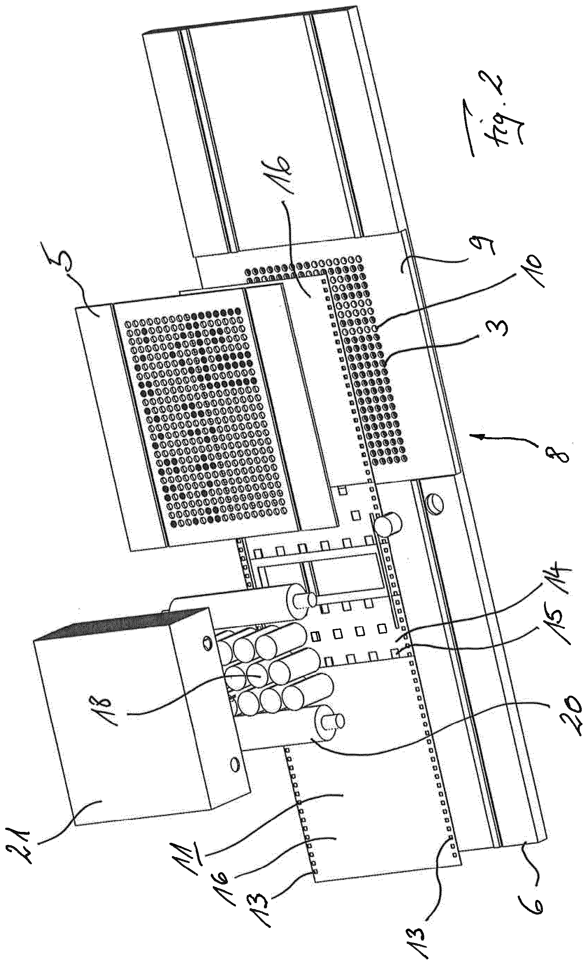

Die Fig. 1 und 2 zeigen ein Schreibgerät 1 zur Anzeige eines taktilen erfassbaren Punktmusters auf einer Anzeigefläche 2, auf welcher Tastelemente 3, vorzugsweise Kugeln, als taktile Elemente (ertastbare Erhabenheiten) angeordnet werden. Die Anzeigefläche 2 ist durch matrixartig in einem Öffnungsraster in Zeilen und Spalten angeordnete Tastöffnungen 4 gebildet, hier in Form kreisrunder Löcher in einer Oberplatte 5. Die Oberplatte 5 befindet sich bezogen auf eine Führungseinrichtung 6 des Schreibgeräts 1 in einer Anzeigeebene 7, in welcher die Anzeigefläche 2 liegt. Jede Tastöffnung 4 der Oberplatte 5 entspricht einem Tastpunkt, der einen von zwei möglichen Zuständen einnehmen kann, indem entweder durch die Öffnung 4 ein Tastelement 3 herausragt, welches ertastet werden kann, oder die Öffnung 4 ist leer und das zugeordnete Objekt 3 befindet sich in einer vertikal unterhalb der Anzeigeebene 7 angeordneten Lageebene 8. In dieser Lageebene 8 befindet sich eine Unterplatte 9 mit im selben Öffnungsraster angeordneten Lageöffnungen 10, insbesondere in Form von Löchern oder Sacklöchern, in welchen wiederum Tastelemente 3 entnehmbar einliegen.

Wie aus Fig. 2 vergleichsweise deutlich ersichtlich ist, ist zwischen der Unterplatte 9 und der Oberplatte 5 eine Trennplatte 11 angeordnet. Diese ist gegenüber der in der Führungseinrichtung 6 stationär angeordneten Oberplatte 5 und der ebenfalls stationären Unterplatte 9 in Bewegungsrichtung 12 translatorisch bewegbar und hierzu in der Führungseinrichtung 6 entsprechend längsverschiebbar geführt. Zur translatorischen Bewegung der Trennplatte 11 kann ein manueller oder auch ein elektromotorischer Antrieb vorgesehen sein, der in nicht näher dargestellter Art und Weise mit einer Perforierung 13 an den Längsseiten der Trennplatte 11 zusammenwirkt.

Die Trennplatte 11 weist einen von einem ersten Plattenbereich oder -abschnitt 14 gebildeten und für die Tastelemente 3 durchlässigen Aussparungsbereich mit einer Anzahl von Aussparungen 15 auf. An diesen schließt sich in Bewegungsrichtung 12 ein zweiter Plattenbereich oder -abschnitt 16 an, der für die Tastelemente 3 undurchlässig, d.h. vollständig geschlossen ist. Im Ausführungsbeispiel schließt sich beidseitig des ersten Plattenbereichs (Aussparungsbereichs) jeweils ein zweiter Plattenbereich 16 an, der für die Tastelemente 3 undurchlässig ist.

Oberhalb der Anzeigeebene 2 und somit oberhalb der Oberplatte 5 befindet sich eine Schreibkopfanordnung 17 mit einer Anzahl von in einem bestimmten Raster angeordneten Schreibköpfen 18. Diese sind im Ausführungsbeispiel als ansteuerbare Elektromagnete ausgeführt. Die Schreibköpfe 18 sind in Bewegungsrichtung 12 in Reihen hintereinander und in Querrichtung 19 hierzu versetzt angeordnet. Mit dieser Anordnung der Schreibköpfe 18 können in nur drei Reihen insgesamt sechzehn Schreibköpfe 18 angeordnet werden, von denen jeweils ein Schreibkopf 18 eine der im Ausführungsbeispiel insgesamt sechzehn Zeilen der Anzeigefläche 2 bzw. des Lochrasters der Oberplatte 5 in Bewegungsrichtung 12 überstricht. Hierzu ist die Schreibkopfanordnung 17 ebenfalls in Bewegungsrichtung 12 angetrieben.

In Bewegungsrichtung 12 gesehen beidseitig der Schreibkopfanordnung 17 ist jeweils eine drehbare Rückführungsrolle 20 angeordnet, die ein Ausdrücken der Tastelemente 3 aus den zugeordneten Tastöffnungen 4 der Oberplatte 5 unterstützen. Eine Abdeckkappe 21 deckt die Schreibkopfanordnung 17 und die Rückführungsrollen 20 ab. Ein in Querrichtung 19 seitlich neben der Trennplatte 11 und der Schreibkopfanordnung 17 in der Führungseinrichtung 6 angeordneter Positionssensor 22 erfasst - relativ zur stationären Oberplatte 5 - die aktuelle Position der Trennplatte 11 und/oder der Schreibkopfanordnung 17.

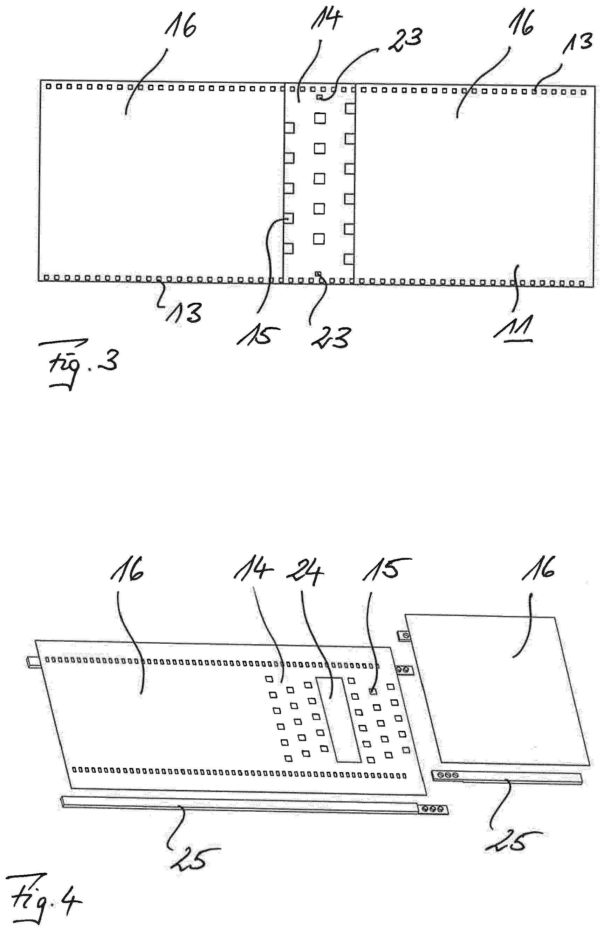

Fig. 3 zeigt die Trennplatte 11 mit deren zentralen ersten Plattenbereich 14 mit den als Durchgangsöffnung ausgeführten Aussparungen 15. Erkennbar sind diese in dem selben Raster wie die Schreibköpfe 18 angeordnet. Beidseitig dieses für die Tastelemente 3 durchlässigen ersten Plattenabschnitt 14 befinden sich die beiden zweiten Plattenabschnitte 16, die vollständig geschlossen und somit für die Tastelemente 3 undurchlässig sind. Im ersten Plattenbereich 14 befinden sich im Ausführungsbeispiel diametral gegenüberliegend zwei Aussparungen 23, in welche in nicht näher dargestellter Art und Weise korrespondierende Mitnahmestifte der Schreibkopfanordnung 17 eingreifen. Durch diese mechanische Kopplung zwischen der Schreibkopfanordnung 17 und der Trennplatte 11 wird jede Bewegung der Trennplatte 11 auf die Schreibkopfanordnung 17 übertragen. Wird die Trennplatte 11 manuell über die Anzeigefläche 2 verfahren, so erfasst der Sensor 22 die Position der Trennplatte 11 und damit auch der Schreibkopfanordnung 17. Eine (nicht dargestellte) Steuereinheit ermittelt die Zielposition für die Tastelemente 3, die sich unterhalb der Schreibkopfanordnung17 in der Oberplatte 5 oder in der Unterplatte 9 befinden.

Soll ein Tastelement 3 in die obere Position verbracht werden, so wird der entsprechende Schreibkopf 18 angesteuert und aktiviert. Im Ausführungsbeispiel wird der entsprechende Elektromagnet bestromt. Anderenfalls bleibt der entsprechende Schreibkopf 18 deaktiv und das entsprechende Tastelement 3 verbleibt in der korrespondierenden Öffnung 10 der Unterplatte 9 oder fällt aus der korrespondierenden Tastöffnung 4 der Oberplatte 5 in die Unterplatte 9 und dort in die korrespondierende Lageöffnung 10 zurück. Bewegen sich die Schreibkopfanordnung 17 und die Trennplatte 21 in Bewegungsrichtung 12 weiter, so verhindert der für die Tastelemente 3 undurchlässige zweite Plattenabschnitt 15 ein Zurückfallen der zuvor mittels der Schreibkopfanordnung 17 angehobenen und in die entsprechende Tastöffnung 4 der Oberplatte 5 transportierte Trennelemente 3. Auf diese Weise wird Zug um Zug jeder gewünschte Tastpunkt gesetzt, bis die Schreibkopfanordnung 17 die Oberplatte 5 und somit die Anzeigefläche 2 vollständig überfahren hat.

Bei der Ausführungsform der Trennplatte gemäß Fig. 4 ist in deren ersten, durchlässigen Plattenbereich 14 ein Öffnungsfenster 24 eingebracht. Dieses überspannt alle Zeilen des Öffnungsrasters der Oberplatte 5 und kann sich über mehrere Spalten erstrecken. Über dieses Öffnungsfenster 24 können somit beim Überschreiben der Anzeigefläche 2 zeitgleich mehrere Tastelemente 3 aus der Oberplatte 5 in die Unterplatte 9 zurückfallen.

Beidseitig benachbart zu diesem Öffnungsfenster 24 befinden sich jeweils ein Aussparungsbereich mit in entsprechendem Aussparungsraster angeordneten Aussparungen 15. Bewegen sich die Trennplatte 11 und hiermit geeigneterweise synchron die Schreibkopfanordnung 17 in Bewegungsrichtung 12 beispielsweise nach rechts, so werden die Schreibköpfe 18 über dem linken Aussparungsbereich positioniert. Bewegen sich die Schreibköpfe 18 in Bewegungsrichtung 12 nach links, so werden diese über dem rechten Aussparungsbereich positioniert. Hierdurch befinden sich die Schreibköpfe 18 stets in Bewegungsrichtung 12 hinter dem Öffnungsfenster 24. Die Rückführung der Tastelemente 3 kann weiter verbessert werden, indem die Rückführungsrollen 20 eine Rückstellkraft auf die Tastelemente 3 ausüben.

Über die Mitnehmeröffnungen 23, die in nicht näher dargestellter Art und Weise bei der Ausführungsform der Trennplatte 11 nach Fig. 4 als in Bewegungsrichtung 12 verlaufende Längsschlitze ausgeführt sind, wird bei einer Bewegung der Trennplatte 11 in Bewegungsrichtung 12 oder in Gegenrichtung hierzu synchron auch die Schreibkopfanordnung 17 mitgeführt und hierbei vorzugsweise von der Trennplatte 11 aufgrund deren Kopplung mit der Schreibkopfanordnung 17 mitgezogen, so dass lediglich die Trennplatte 11 angetrieben werden muss. Alternativ können auch die Schreibkopfanordnung 17 und die Trennplatte 11 getrennt voneinander beispielsweise elektromotorisch bewegt werden. Hierbei erfassen dann zwei Sensoren 22 die Position der Schreibkopfanordnung 17 einerseits und der Trennplatte 11 andererseits. Anhand der Sensordaten bewirkt in nicht näher dargestellter Art und Weise eine Steuerungseinheit, dass die Position der Schreibkopfanordnung 17 und der Trennplatte 11 kontinuierlich aufeinander abgestimmt werden, so dass sich die Schreibköpfe 18 stets über der korrespondierenden Aussparung 14 der Trennplatte 11 befinden.

Wie aus Fig. 4 erkennbar ist, ist der oder jeder geschlossene und für die Tastelemente 3 undurchlässige zweite Plattenbereich 16 vom die Aussparungen 14 aufweisenden Plattenbereich 14 der Trennplatte 11 abtrennbar. Hierzu sind die Plattenbereiche 14, 16 im Ausgangszustand mittels über Loch-Stift-Verbindungen gehaltenen Haltestreben 25 lösbar aneinander befestigt. Die Abmessung (Fläche) des undurchlässigen Plattenbereichs 15 ist hierbei an die Abmessung der Anzeigefläche 2 der Oberplatte 5 angepasst und überdeckt praktisch das gesamte Lochraster der Tastöffnungen 4.

Durch diese Ausgestaltung ist die Anzeigefläche 2 zur separaten Aufbewahrung oder zum Mitführen aus der Führungseinrichtung 6 entnehmbar und somit vom Schreibgerät 1 separierbar. Eine dadurch gebildete Anzeigetafel enthält als Komponenten einen Träger und die in dem gewünschten und zuvor hergestellten Tastpunktmuster mit den entsprechenden Tastelementen 3 bestückte Oberplatte 5 sowie den undurchlässigen Plattenbereich 16 der Trennplatte 11. Der somit separierbaren Anzeigetafel kann auch die Unterplatte 9 zugeordnet sein. Die entsprechenden Komponenten der Anzeigetafel in Form zumindest der Oberplatte 5 und des undurchlässigen Plattenbereichs 16 der Trägerplatte 11 sowie gegebenenfalls der Unterplatte 9 können beispielsweise durch Verrastung oder Verschraubung miteinander gefügt werden. Ein Herausfallen der Tastelemente 3 wird nach unten durch den undurchlässigen Plattenbereich 16 und nach oben dadurch verhindert, dass die Tastöffnungen 4 der Oberplatte 5 einen zumindest geringfügig kleineren Durchmesser - also eine kleinere lichte Weite - aufweisen als der- bzw. diejenige der Tastelemente 3.

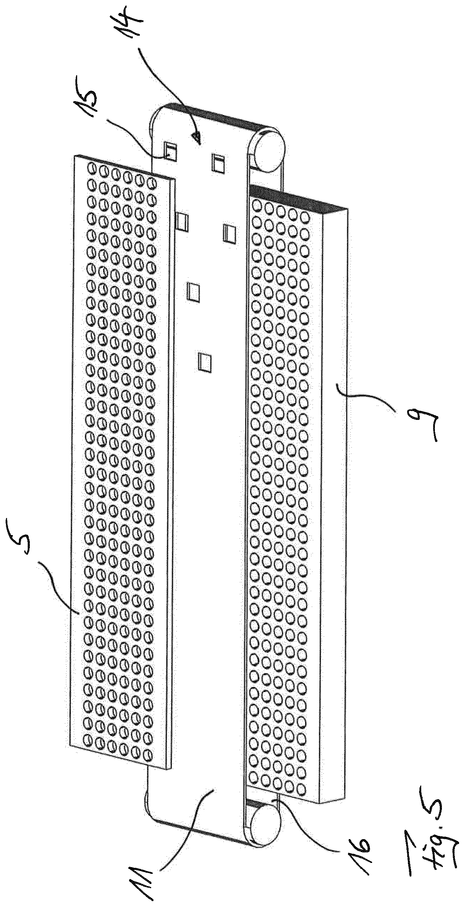

Fig. 5 zeigt eine Ausführungsform der Trennplatte 11 in Form eines geschlossenen Trennbandes. Innerhalb dieses Trennbandes befindet sich die Unterplatte 9, während sich die Oberplatte 5 oberhalb dieser als Trennwand ausgeführten Trennplatte 11 befindet. In der Darstellung befindet sich der Aussparungsbereich mit den Aussparungen 15 gerade zwischen der Unterplatte 9 und der Oberplatte 5, während sich der anschließende undurchlässige Platten- bzw. Bandbereich 16 unterhalb der Unterplatte 9 befindet. Bei der entnehmbaren Variante und hierzu bereitgestellter Anzeigetafel umfasst diese die Oberplatte 5 und die als Trennband ausgeführte Trennplatte 11 sowie die Unterplatte 9, die von der trennwandartigen Trennplatte 11 praktisch umschlossen ist.

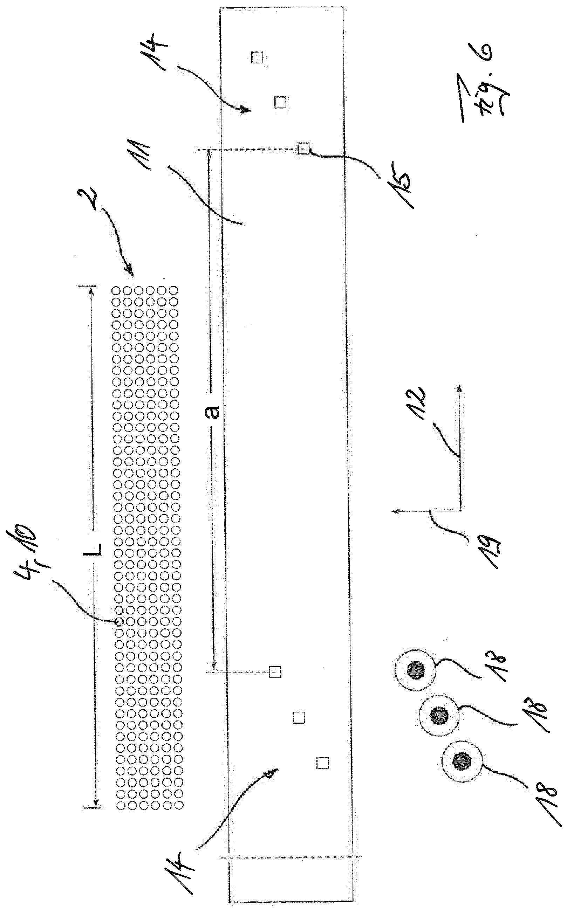

Die Fig. 6 bis 8 zeigen Varianten der Anordnung und Ausgestaltung der Aussparungen 15 entlang der Trennplatte 11. Gemäß Fig. 6 sind beispielhaft drei Aussparungen 15 in Bewegungsrichtung 12 hintereinander und in Querrichtung 19 hierzu gegeneinander versetzt angeordnet. Die korrespondierende Anordnung der Schreibköpfe 18 ist ebenfalls dargestellt. Zudem ist ein wiederum als Matrix mit Zeilen und Spalten ausgeführtes Tastlochraster mit Tastöffnungen 4 zur Aufnahme entsprechender Tastelemente 3 dargestellt. Der Abstand a der beiden gezeigten Aussparungsbereiche entspricht der Länge L des Tastlochrasters und somit der Länge der Anzeigefläche 2. Bei der Ausführung gemäß Fig. 6 ist jeweils nur ein Schreibkopf (Elektromagnet) 18 für zwei Aussparungen 15 und somit für zwei benachbarte Zeilen des Öffnungsrasters der Tastöffnungen 4 vorgesehen, nämlich jeweils für die beiden oberen, für die beiden mittleren und für die beiden unteren der links und rechts dargestellten Dreiergruppen von Aussparungen 15.

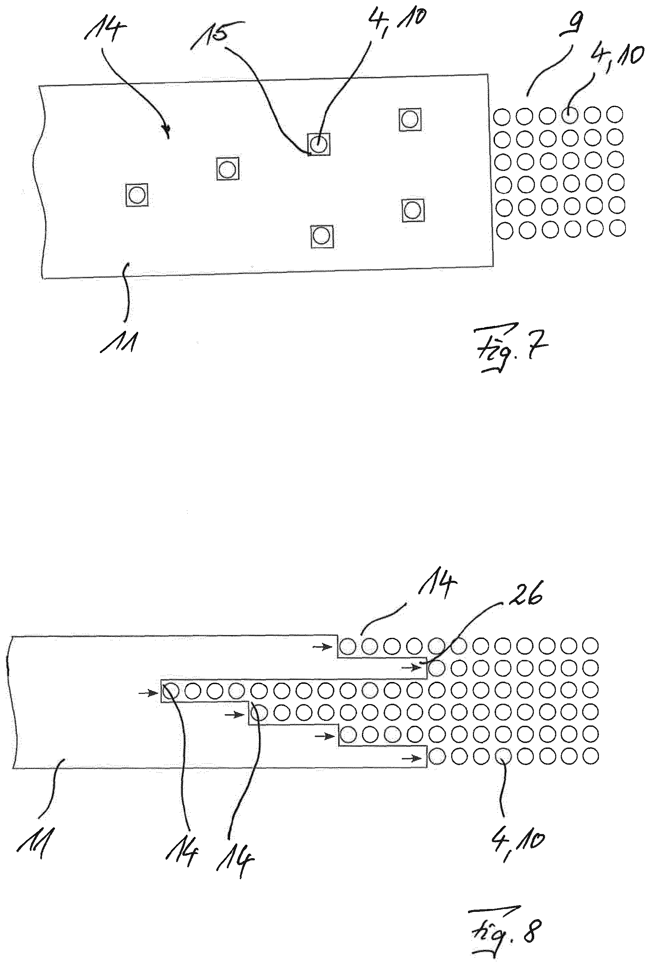

Fig. 7 zeigt einen momentanen Zustand der Überdeckung der Anzeigefläche 2 mit den darin wiederum matrixartig angeordneten Tastöffnungen 4 der Oberplatte 5 und hiermit korrespondierenden Lageöffnungen 10 der Unterplatte 9. Das Öffnungsraster besteht hier aus insgesamt sechs Zeilen. Entsprechend umfasst der Ausnehmungsbereich der Trennplatte 11 sechs teilweise zeilenweise nebeneinander und ansonsten versetzt hintereinander angeordnete Aussparungen 15. Erkennbar fluchtet jede der Aussparungen 15 mit einer Tastöffnung 4 bzw. Lageöffnung 10 in jeweils einer der Zeilen des Öffnungsrasters. Im Zuge des Überfahrens des Aussparungsbereichs der Trennplatte 11 über die Öffnungen 4, 10 fluchten diese miteinander sowie mit der entsprechenden Aussparung 15 in der jeweiligen Zeile von Spalte zu Spalte. Auf diese Weise kann jede Tastöffnung 4 der Oberplatte 5 mit einem Tastelement 3 bestückt werden oder von dort über den durch die Öffnungen 4 und 10 sowie die korrespondierende Aussparung 15 gebildeten Transportkanal in die Unterplatte 9 zurückfallen.

Fig. 8 zeigt eine Ausgestaltung des Aussparungsbereichs der Trennplatte 11 in Form eines Schnittkantenmusters. Dort sind an den durch die Pfeile 26 symbolisierten Positionen die jeweiligen Schreibköpfe 18 angeordnet. Deren Versatz entspricht im Ausführungsbeispiel dem Anordnungsraster gemäß Fig. 7.

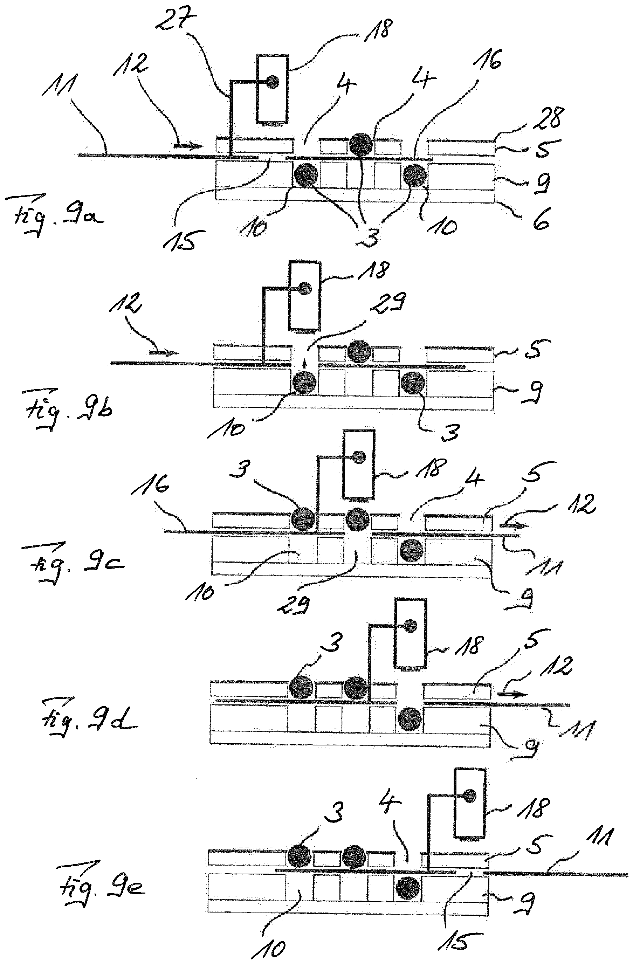

Die Funktionsweise des Schreibgeräts 1 ist in den Fig. 9a bis 9e für eine einzelne Tastpunktreihe des Öffnungsrasters der Ober- und Unterplatte 5 bzw. 9 veranschaulicht. Zwischen der Oberplatte 5 und der Unterplatte 9 befindet sich die Trennplatte 11, die hier entsprechend des dargestellten Pfeils in Bewegungsrichtung 12 von links nach rechts verfahren wird. Oberhalb dieser Plattenanordnung 5, 6, 9 befindet sich einer der Schreibköpfe 18 der Schreibkopfanordnung 17. Die Kopplung des entsprechenden Schreibkopfes 18 mit der Trennplatte 11 ist durch eine Verbindungslinie 27 veranschaulicht. Vereinfacht dargestellt ist zudem eine Abdeckung 28 auf der Oberplatte 5. Erkennbar ermöglicht die Trennplatte 11 zwischen der Oberplatte 5 und der Unterplatte 9 lediglich an bestimmten Stellen, an denen sich eine Aussparung 15 in der Trennplatte 11 befindet, einen Transportkanal zwischen einer Lageöffnung 10 der Unterplatte 9 und einer korrespondierenden Tastöffnung 4 der Oberplatte 5. Der entsprechende, mit dieser Zeile oder Reihe des Tastpunktrasters korrespondierende Schreibkopf 18 befindet sich stets über der Aussparung 15.

Bei der Darstellung gemäß Fig. 9a ist ein Tastelement 3 in einer entsprechenden Tastöffnung 4 der Oberplatte 5 angeordnet und dort vom undurchsichtigen Plattenbereich 16 der Trennplatte gegen ein Zurückfallen in die Unterplatte 9 gesichert ist, während dort in entsprechenden Lageöffnungen 10 zwei weitere Tastelemente 3 angeordnet sind. Diese können in dieser Position der Trennplatte 11 nicht durch deren undurchlässigen Plattenbereich 16 in die korrespondierenden Tastöffnungen 4 der Oberplatte 5 transportiert werden.

Fig. 9b zeigt das Schreibgerät 1 in einer in Bewegungsrichtung 12 weiter geführten Position, in der sich der entsprechende Schreibkopf 18 oberhalb der in der Zeichnung linken Tastöffnung 4 befindet. In dieser Position befindet sich auch die Aussparung 15 der synchron mit dem Schreibkopf 18 bewegten Trennplatte 11 in Überdeckung mit dieser Tastöffnung 4. Diese fluchtet ihrerseits mit der korrespondierenden Lageöffnung 10 der Unterplatte 9, so dass ein entsprechender Transportkanal 29 für den Transport, d.h. ein Anheben des Tastelements 3 aus der Unterplatte 9 über die Trennplatte 11 in die Oberplatte 5 ermöglicht ist.

In der in Fig. 9c in Bewegungsrichtung 12 weiter fortgeschrittenen Position des Schreibkopfes 18 mit der Trennplatte 11 befindet sich deren undurchlässiger Plattenbereich 16 unterhalb der zuvor bestückten Tastöffnung 4 der Oberplatte 5 mit darin einliegendem Tastelement 3. Der hierzu benachbarte Transportkanal 29 ist nunmehr ebenfalls über die Aussparung 15 der Trennplatte 11 freigegeben, so dass das dort befindliche Tastelement 3 entweder mittels des Schreibkopfes 18 in dieser Position gehalten wird, bis der undurchlässige Plattenbereich 16 der Trennplatte auch diesen Transportkanal 29 verschließt, oder dieses Tastelement 3 fällt in die Unterplatte 9 zurück, wenn der Schreibkopf 18 in dieser Position deaktiviert ist.

Die Fig. 9d und 9e zeigen die Situation des in Bewegungsrichtung12 folgenden Transportkanals 29, indem dort die Tastöffnung 4 der Oberplatte 5 und die Aussparung 15 der Trennplatte 11 sowie die Lageöffnung 10 der Unterplatte 9 miteinander fluchten. Hier ist beispielhaft veranschaulicht, dass der Schreibkopf 18 deaktiviert ist, so dass das entsprechende Tastelement 3 in der Unterplatte 9 verbleibt und die Trennplatte 11 mit deren undurchlässigen Plattenbereich 16 die entsprechende Lageöffnung 10 im Zuge der weiteren Bewegung der Trennplatte 11 in Bewegungsrichtung 12 verschließt.

Insbesondere um eine Grafik anzuzeigen, ist eine große Anzahl von Tastpunkten notwendig. Bei der in den Fig. 1 und 2 dargestellten Ausführungsform des Schreibgeräts 1 sind 384 Tastpunkte in sechzehn Zeilen und vierzehn Spalten darstellbar. Das Öffnungsraster der Ober- und Unterplatte 5 bzw. 9 beträgt, wie bei der Braille-Schrift üblich, etwa 2,5 mm. Der Durchmesser der hier als Kugeln ausgeführten Tastelemente 3 beträgt etwa 1,6 mm. Die bewegliche Schreibkopfanordnung 17 enthält insgesamt sechzehn Elektromagnete als Schreibköpfe 18, nämlich jeweils einen Elektromagnet für jede Zeile. Da aufgrund des vergleichsweise großen Durchmessers der Elektromagnete deren matrixartige Anordnung das Rastermaß des Tastpunktrasters übersteigen würde, sind diese versetzt angeordnet.

Aufgrund einer derartigen versetzten Anordnung einzelner Elektromagnete als Schreibköpfe 18 in Verbindung mit einer einen Aussparungsbereich im gleichen Anordnungsraster der Elektromagnete aufweisenden Trennplatte 11 zwischen der Oberplatte 5 und der Unterplatte 9 lässt sich diese hohe Anzahl von Tastpunkten auf einer praktisch minimalen Anzeigefläche 2 kostensparend realisieren. Eine weitere Kosteneinsparung kann dadurch erzielt werden, dass nur ein einem Bruchteil des Öffnungsrasters der Anzeigefläche 2 entsprechender Bruchteil von Elektromagneten als Schreibköpfe 18 eingesetzt wird. Diese überfahren oder überstreichen zusammen mit einer entsprechend ausgeführten Trennplatte 11 zeilenweise die entsprechenden Zeilengruppen nacheinander, wobei die entsprechenden Gruppen von Tastöffnungen 4 der Oberplatte 5 bestückt oder bereits gesetzte Tastelemente 3 in die Unterplatte 9 zurückgeführt werden.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

So kann als Schreibkopfanordnung beispielsweise auch eine pneumatisch betriebene Transport- oder Schreibkopfanordnung vorgesehen sein, die über eine entsprechende Anordnung von Saugöffnungen die Tastelemente 3 aus der Unterplatte 9 in die Oberplatte 5 fördert. Zudem können anstelle der Kugeln auch anders geformte Tastelemente 3, beispielsweise zylinderförmige Stifte oder dergleichen, vorgesehen sein. Des Weiteren können die Lageöffnungen 10 der Unterplatte 9 mit im Durchmesser vergleichsweise kleinen, d. h. insbesondere kleinsten Durchgangsöffnungen versehen sein, die ein Durchspülen der Oberplatte 5 und der Unterplatte 9 mittels einer Reinigungsflüssigkeit ermöglichen, ohne die Tastelemente 3 zu entfernen. Ferner kann lediglich ein Teil der als Trennband ausgeführten Trennplatte 11 biegeelastisch oder biegsam ausgeführt sein.

### Bezugszeichenliste

- 1: Schreibgerät
- 2: Anzeigefläche
- 3: taktiles Element/Tastelement
- 4: Tastöffnung
- 5: Oberplatte
- 6: Führungseinrichtung
- 7: Anzeigeebene
- 8: Lageebene
- 9: Unterplatte
- 10: Lageöffnung
- 11: Trennplatte
- 12: Bewegungsrichtung
- 13: Perforierung
- 14: erster Plattenbereich
- 15: Aussparung
- 16: zweiter Plattenbereich
- 17: Schreibkopfanordnung
- 18: Schreibkopf
- 19: Querrichtung
- 20: Rückführungsrolle
- 21: Abdeckkappe
- 22: Positionssensor
- 23: Aussparung
- 24: Öffnungsfenster
- 25: Haltestrebe
- 26: Positionspfeil
- 27: Verbindungslinie
- 28: Abdeckung
- 29: Transportkanal

## Patentansprüche

1. Schreibgerät (1) zur Anzeige eines taktil erfassbaren Tastpunktmusters,
- mit in einer Lageebene (8) einer Führungseinrichtung (6) einer Unterplatte (9) mit einer Anzahl von matrixartig in einem Öffnungsraster in Zeilen und Spalten angeordneten Lageöffnungen (10), in denen taktile Elemente (3) entnehmbar einliegen,
- mit in einer zur Lageebene (8) vertikal beabstandeten Anzeigeebene (7) einer Oberplatte (5) mit einer Anzahl von Tastöffnungen (4), deren jede mit einer korrespondierenden Lageöffnungen (10) der Unterplatte (9) fluchtet,
- mit einer relativ zur Trag- und Führungseinrichtung (6) in translatorischer Bewegungsrichtung (12) geführten Schreibkopfanordnung (17) mit einer der Anzahl der Zeilen oder einem Bruchteil hiervon entsprechenden Anzahl von Schreibköpfen (18), welche entsprechend dem anzuzeigenden Punktmuster taktile Elemente (3) aus der Unterplatte (9) in die Oberplatte (5) fördern, und
- mit einer zwischen der Unterplatte (9) und der Oberplatte (5) angeordneten und ebenfalls relativ translatorisch geführten Trennplatte (11) mit einem für die taktilen Elemente (3) durchlässigen ersten Plattenbereich (14) mit einer der Anzahl der Zeilen des Öffnungsrasters der Öffnungen (4, 10) und/oder der Anzahl der Schreibköpfe (18) oder einem Bruchteil hiervon entsprechenden Anzahl von Aussparungen (15) sowie mit einem sich in Bewegungsrichtung (12) an den ersten Plattenbereich (14) anschließenden und für die taktilen Elemente (3) undurchlässigen zweiten Plattenbereich (16),
- wobei jedem der Schreibköpfe (18) jeweils eine Aussparung (15) im durchlässigen ersten Plattenbereich (14) derart zugeordnet ist, dass die Aussparungen (15) der Trennplatte (11) den Transportkanal zwischen den korrespondierenden, miteinander fluchtenden Öffnungen (10, 4) der Unter- und Oberplatte (9, 5) abschirmen.

2. Schreibgerät (1) nach Anspruch 1,
**dadurch gekennzeichnet,**
**dass** in der Schreibkopfanordnung (17) zumindest einige der Schreibköpfe (18) in Bewegungsrichtung (12) hintereinander und zeilenweise versetzt angeordnet sind.

3. Schreibgerät (1) nach Anspruch 1 oder 2,
**dadurch gekennzeichnet,**
**dass** die Schreibkopfanordnung (17) auch in Gegenrichtung zur translatorischen Bewegungsrichtung (12) verfahrbar geführt ist.

4. Schreibgerät (1) nach einem der Ansprüche 1 bis 3,
**dadurch gekennzeichnet,**
**dass** die Trennplatte (11) beidseitig des für die taktilen Elemente (3) durchlässigen ersten Plattenbereich (14) einen für die taktilen Elemente (3) undurchlässigen zweiten Plattenbereich (16) aufweist.

5. Schreibgerät (1) nach einem der Ansprüche 1 bis 4,
**dadurch gekennzeichnet,**
**dass** der für die taktilen Elemente (3) durchlässige erste Plattenbereich (14) ein sich in Querrichtung (19) zur Bewegungsrichtung (12) über zumindest eine der Zeilen, vorzugsweise über mehrere, insbesondere über alle Zeilen, des Öffnungsrasters der Tast- und/oder Lageöffnungen (4, 10) erstreckendes Öffnungsfenster (24) und in Bewegungsrichtung (12) vor und/oder nach dem Öffnungsfenster (24) die Aussparungen (15) aufweist.

6. Schreibgerät (1) nach einem der Ansprüche 1 bis 5,
**dadurch gekennzeichnet,**
**dass** der für die taktilen Elemente (3) undurchlässige zweite Plattenbereich (16) zumindest die Abmessungen des Öffnungsrasters der Tast- und/oder Lageöffnungen (4, 10) aufweist und mit dem ersten Plattenbereich (14) lösbar verbunden ist.

7. Schreibgerät (1) nach Anspruch 6,
**dadurch gekennzeichnet,**
**dass** der für die taktilen Elemente (3) undurchlässige zweite Plattenbereich (16) der Trennplatte (11) zusammen mit der Oberplatte (5), vorzugsweise zusätzlich zusammen mit der Unterplatte (9), von der Führungseinrichtung (6) entnehmbar ausgeführt ist.

8. Schreibgerät (1) nach einem der Ansprüche 1 bis 5,
**dadurch gekennzeichnet,**
**dass** die Trennplatte (11) als biegeelastisches und/oder geschlossenes Trennband ausgeführt ist.

9. Schreibgerät (1) nach Anspruch 8,
**dadurch gekennzeichnet,**
**dass** die als biegeelastisches und/oder geschlossenes Trennband ausgeführte Trennplatte (11) zusammen mit der Oberplatte (5), vorzugsweise zusätzlich zusammen mit der Unterplatte (9), von der Führungseinrichtung (6) entnehmbar ausgeführt ist.

10. Schreibgerät (1) nach einem der Ansprüche 1 bis 9,
**dadurch gekennzeichnet,**
**dass** die Aussparungen (15) der Trennplatte (11) in einem Aussparungsraster angeordnet sind, welches dem Anordnungsraster der Schreibköpfe (18) entspricht.

## Claims

1. Writing instrument (1) for displaying a touch dot pattern which can be detected in a tactile manner,
- having in a position plane (8) of a guiding device (6) a lower plate (9) having a number of position openings (10) which are arranged in a matrix-like manner in an opening grid in columns and lines and in which tactile elements (3) are located so as to be able to be removed,
- having in a display plane (7) which is vertically spaced apart from the position plane (8) an upper plate (5) having a number of touch openings (4), each of which is in alignment with a corresponding position opening (10) of the lower plate (9),
- having a writing head arrangement (17) which is guided in a translational movement direction (12) relative to the carrying and guiding device (6) and which has a number of writing heads (18) which corresponds to the number of lines or a fraction thereof and which convey tactile elements (3) from the lower plate (9) into the upper plate (5) in accordance with the dot pattern which is intended to be displayed, and
- having a partition plate (11) which is arranged between the lower plate (9) and the upper plate (5) and which is also guided in a translational manner in relative terms and which has a first plate region (14) which is permeable to the tactile elements (3) and which has a number of recesses (15) which corresponds to the number of lines of the opening grid of the openings (4, 10) and/or the number of writing heads (18) or a fraction thereof and which has a second plate region (16) which adjoins the first plate region (14) in the movement direction (12) and which is non-permeable to the tactile elements (3),
- wherein a recess (15) in the permeable first plate region (14) is associated with each of the writing heads (18) in such a manner that the recesses (15) of the partition plate (11) screen the transport channel between the corresponding openings (10, 4) of the lower and upper plates (9, 5) which are in alignment with each other.

2. Writing instrument (1) according to Claim 1, **characterized in that** in the writing head arrangement (17) at least some of the writing heads (18) are arranged one behind the other in the movement direction (12) and offset in lines.

3. Writing instrument (1) according to Claim 1 or 2, **characterized in that** the writing head arrangement (17) is guided so as to also be able to be moved in the opposite direction to the translational movement direction (12).

4. Writing instrument (1) according to any of Claims 1 to 3,
**characterized in that** the partition plate (11) has at both sides of the first plate region (14) which is permeable to the tactile elements (3) a second plate region (16) which is non-permeable to the tactile elements (3).

5. Writing instrument (1) according to any of Claims 1 to 4,
**characterized in that** the first plate region (14) which is permeable to the tactile elements (3) has an opening window (24) which extends in the transverse direction (19) relative to the movement direction (12) over at least one of the lines, preferably over a plurality, in particular over all of the lines, of the opening grid of the touch and/or position openings (4, 10) and the recesses (15) in the movement direction (12) upstream and/or downstream of the opening window (24).

6. Writing instrument (1) according to any of Claims 1 to 5,
**characterized in that** the second plate region (16) which is non-permeable to the tactile elements (3) has at least the dimensions of the opening grid of the touch and/or position openings (4, 10) and is releasably connected to the first plate region (14).

7. Writing instrument (1) according to Claim 6,
**characterized in that** the second plate region (16) of the partition plate (11), which region is non-permeable to the tactile elements (3), together with the upper plate (5), preferably additionally together with the lower plate (9), is constructed so as to be able to be removed from the guiding device (6).

8. Writing instrument (1) according to any of Claims 1 to 5,
**characterized in that** the partition plate (11) is constructed as a resilient and/or closed partition strip.

9. Writing instrument (1) according to Claim 8,
**characterized in that** the partition plate (11) which is constructed as a resilient and/or closed partition strip, together with the upper plate (5), preferably additionally together with the lower plate (9), is constructed so as to be able to be removed from the guiding device (6).

10. Writing instrument (1) according to any of Claims 1 to 9,
**characterized in that** the recesses (15) of the partition plate (11) are arranged in a recess grid which corresponds to the arrangement grid of the writing heads (18).

## Revendications

1. Instrument d'écriture (1) destiné à afficher un motif de points tactiles, perceptible de manière tactile,
- pourvu d'un plan de position (8) d'un dispositif de guidage (6) d'un plateau inférieur (9) disposant d'un nombre d'orifices de position (10) disposés en forme de matrice selon une trame d'orifices en lignes et en colonnes, dans lesquels des éléments tactiles (3) sont placés de manière amovible,
- pourvu d'un plan d'affichage (7) écarté à la verticale par rapport au plan de position (8) d'un plateau supérieur (5) avec un nombre d'orifices tactiles (4), dont chacun est aligné sur un orifice de position (10) correspondant du plateau inférieur (9),
- pourvu d'un ensemble de têtes d'écriture (17) guidé dans la direction de déplacement en translation (12) par rapport au dispositif de support et de guidage (6), disposant d'un nombre de têtes d'écriture (18) correspondant au nombre de lignes ou à une fraction de ce dernier, lesquelles, en fonction du motif de point à afficher, convoient des éléments tactiles (3) hors du plateau inférieur (9) dans le plateau supérieur (5) et
- pourvu d'un plateau séparateur (11) placé entre le plateau inférieur (9) et le plateau supérieur (5) et également guidé relativement en translation, comportant une première zone de plateau (14) laissant passer les éléments tactiles (3) avec un nombre d'évidements (15) correspondant au nombre de lignes de la trame d'orifices des orifices (4, 10) et/ou au nombre des têtes de lecture (18) ou à une fraction de celui-ci, ainsi qu'avec une deuxième zone de plateau (16) se raccordant à la première zone de plateau (14) dans la direction de déplacement (12) et ne laissant pas passer les éléments tactiles (3),
- à chacune des têtes d'écriture (18) étant associé un évidement (15) dans la première zone de plateau (14) passante, de telle sorte que les évidements (15) du plateau séparateur (11) protègent le canal de transport entre les orifices (10, 4) correspondants, alignés les uns sur les autres, des plateaux inférieur et supérieur (9, 5).

2. Instrument d'écriture (1) selon la revendication 1,
**caractérisé en ce que** dans l'ensemble de têtes d'écriture (17), au moins quelques-unes des têtes d'écriture (18) sont placées les unes derrière les autres et en décalage par lignes, dans la direction de déplacement (12).

3. Instrument d'écriture (1) selon la revendication 1 ou 2,
**caractérisé en ce que** l'ensemble de têtes d'écriture (17) est également guidé en étant déplaçable dans la direction opposée à la direction de déplacement (12) en translation.

4. Instrument d'écriture (1) selon l'une quelconque des revendications 1 à 3,
**caractérisé en ce que** de part et d'autre de la première zone de plateau (14) laissant passer les éléments tactiles (3), le plateau séparateur (11) comporte une deuxième zone de plateau (16) ne laissant pas passer les éléments tactiles (3).

5. Instrument d'écriture (1) selon l'une quelconque des revendications 1 à 4,
**caractérisé en ce que** la première zone de plateau (14) laissant passer les éléments tactiles (3) comporte une fenêtre d'orifices (24) s'étendant dans la direction transversale (19) de la direction de déplacement (12) sur au moins l'une des lignes, de préférence sur plusieurs, notamment sur toutes les lignes de la trame d'orifices des orifices tactiles et/ou de position (4, 10) et dans la direction de déplacement (12) comporte les évidements (15) avant et/ou après la fenêtre d'orifices (24) .

6. Instrument d'écriture (1) selon l'une quelconque des revendications 1 à 5,
**caractérisé en ce que** la deuxième zone de plateau (16) ne laissant pas passer les éléments tactiles (3) comporte au moins les dimensions de la trame d'orifices des orifices tactiles et/ou de position (4, 10) et est reliée de manière amovible avec la première zone de plateau (14).

7. Instrument d'écriture (1) selon la revendication 6,
**caractérisé en ce que** la deuxième zone de plateau (16), ne laissant pas passer les éléments tactiles (3), du plateau séparateur (11), en commun avec le plateau supérieur (5), de préférence en plus, en commun avec le plateau inférieur (9) est réalisée en étant amovible du dispositif de guidage (6).

8. Instrument d'écriture (1) selon l'une quelconque des revendications 1 à 5,
**caractérisé en ce que** le plateau séparateur (11) est réalisé sous la forme d'une bande séparatrice élastique souple et/ou fermée.

9. Instrument d'écriture (1) selon la revendication 8,
**caractérisé en ce que** le plateau séparateur (11) réalisé sous la forme d'une bande séparatrice élastique souple et/ou fermée, en commun avec le plateau supérieur (5), de préférence en plus, en commun avec le plateau inférieur (9) est réalisé en étant amovible du dispositif de guidage (6).

10. Instrument d'écriture (1) selon l'une quelconque des revendications 1 à 9,
**caractérisé en ce que** les évidements (15) du plateau séparateur (11) sont placés dans une trame d'évidements, laquelle correspond à la trame de placement des têtes d'écriture (18).
